# EUROPÄISCHE PATENTANMELDUNG

(11) **EP 2 698 293 A2**
(43) Veröffentlichungstag der Anmeldung: **19.02.2014**
(21) Anmeldenummer: 13003553.8
(22) Anmeldetag: 15.07.2013
(51) Int. Cl.: B60S 3/00

(54) **Autonomer Betrieb eines Kraftfahrzeugs in einer Waschstraße**

(30) Priorität: 14.08.2012 DE 102012016039
(71) Anmelder: AUDI AG, 85045 Ingolstadt (DE)
(72) Erfinder: Stadler, Michael, 85110 Arnsberg (DE)
(74) Vertreter: Thielmann, Frank

(57) **Zusammenfassung**

Der Komfort und die Sicherheit beim Befahren einer Waschstraße durch ein Kraftfahrzeug soll erhöht werden. Dazu wird ein Verfahren zum autonomen Fahren eines Kraftfahrzeugs (1) in einer Waschstraße (2) und eine entsprechende Waschstraße vorgeschlagen. Die Fahrzeugposition und Fahrzeugorientierung des Kraftfahrzeugs wird durch eine Sensorik (3 bis 5 und 10 bis 15) der Waschstraße (2) ermittelt und an das Kraftfahrzeug (1) übertragen. Damit ist ein automatisches Einfahren und Weiterfahren des Kraftfahrzeugs in der Waschstraße möglich.

## Beschreibung

Die vorliegende Erfindung betrifft ein Verfahren zum autonomen Fahren eines Kraftfahrzeugs in einer Waschstraße. Darüber hinaus betrifft die vorliegende Erfindung eine Waschstraße, die dazu ausgebildet ist, dass in ihr ein Fahrzeug autonom fährt.

Waschstraßen für Kraftfahrzeuge erfreuen sich immer größerer Beliebtheit, da das Kraftfahrzeug in verhältnismäßig kurzer Zeit außen vollständig automatisch gereinigt werden kann. Der Fahrer muss dabei in keiner Reinigungsphase selbst Hand anlegen.

Es gibt verschiedene Typen von Waschstraßen. Bei einem Typ fährt der Fahrer des Fahrzeugs in die Waschstraße, stellt das Fahrzeug ab, verlässt es gegebenenfalls, der Wasch- und anschließende Trocknungsvorgang beginnen und der Fahrer fährt das Fahrzeug am Ende wieder aus der Waschstraße. Bei einem anderen Typ wird das Fahrzeug automatisch von einem Waschraum in einen Trocknungsraum mit einer Schleppkette gezogen, wobei sich das Fahrzeug im Leerlauf befinden muss. Bei einem noch weiteren Typ muss der Fahrer nach dem Waschvorgang des Fahrzeugs von einem Waschraum in einen Trocknungsraum fahren.

In jedem Fall muss der Fahrer das Kraftfahrzeug sehr exakt in eine fest vorgegebene Waschposition in der Waschstraße fahren. Meist sind hierzu Begrenzungsschienen vorgegeben, die eine seitliche Position des Fahrzeugs limitieren. In Fahrtrichtung deutet oft ein optisches Signal an, dass die richtige Waschposition erreicht ist. Gegebenenfalls muss etwas zurückgefahren werden. In einigen Fällen ist es, wie oben angedeutet, auch notwendig, dass der Fahrer das Fahrzeug von einer Waschposition in einem Waschraum zu einer Trocknungsposition in einem Trocknungsraum weiterfährt. Auch dazu muss der Fahrer einen sehr schmalen Korridor einhalten und exakt zu einer festgelegten Position vorfahren. Dieses Fahren in Waschstraßen ist für die meisten Fahrer zumindest unkomfortabel, für manche ist es nicht möglich.

In der Druckschrift DE 10 2005 058 826 A1 ist beschrieben, dass für Fahrzeuge und mobile Systeme eine Vielzahl von Lösungen für Fahrerassistentsysteme und sogar für autonome Fahrsysteme bekannt sind. Übliche Vorrichtungen verwenden GPS-Systeme, Transponder-IDs oder andere Sensoriksysteme zur Positionsbestimmung und/oder zur Kollisionsvermeidung mit anderen Fahrzeugen. Zur verlässlichen Positionsbestimmung für sich autonom bewegende Systeme wird ein Navigationssystem und ein Verfahren für ein Mobil mit N unabhängigen Sensoreinrichtungen zur Bestimmung von N unabhängigen Ortsdatensätzen des Mobils in einem Weltkoordinatensystem und mit einer Auswerteeinrichtung, die programmtechnisch oder schaltungstechnisch zur Verknüpfung der N Ortsdatensätze des Mobils zur Bildung eines Ergebnis-Ortsdatensatzes ausgebildet ist, dargestellt. Dadurch können sicherheitsrelevante Vorgaben für das Rangieren, Einfahren, Durchfahren und Andocken bezogen auf immobile bekannte Einrichtungen wie Laderampen, Gebäudeeinfahrten, Waschstraßen, Tankstellen und dergleichen vorgegeben und sicher eingehalten werden.

Die DE 103 22 765 A1 offenbart einen automatisierten Speditionshof.

Die DE 10 2004 009 465 A1 offenbart ein Steuerungssystem für ein Gespann.

Die Aufgabe der vorliegenden Erfindung besteht darin, das Befahren von Waschstraßen durch Kraftfahrzeuge komfortabler zu gestalten.

Erfindungsgemäß wird diese Aufgabe gelöst durch ein Verfahren zum autonomen Fahren eines Kraftfahrzeugs in einer Waschstraße durch Detektieren einer Fahrzeugposition und Fahrzeugorientierung des Kraftfahrzeugs in oder an der Waschstraße durch eine in die Waschstraße integrierte Detektoreinrichtung unter Erzeugung entsprechender erster Daten, Übertragen der ersten Daten von der Waschstraße an das Kraftfahrzeug, automatisches Einfahren des Fahrzeugs in die Waschstraße anhand der übertragenen ersten Daten, Übertragen von zweiten Daten nach einem vorgegebenen Arbeitsschritt bei einem Waschvorgang des Kraftfahrzeugs von der Waschstraße an das Kraftfahrzeug, automatisches Steuern eines Weiterfahrens des Kraftfahrzeugs in oder aus der Waschstraße in Abhängigkeit von den zweiten Daten.

Darüber hinaus wird erfindungsgemäß bereitgestellt eine Waschstraße die dazu ausgebildet ist, dass in ihr ein Kraftfahrzeug autonom fährt, umfassend eine Detektoreinrichtung zum Detektieren einer Fahrzeugposition und Fahrzeugorientierung des Kraftfahrzeugs in oder an der Waschstraße und zum Erzeugen entsprechender erster Daten, einer Übertragungseinrichtung zum Übertragen der ersten Daten von der Detektoreinrichtung an das Kraftfahrzeug, sowie zum Übertragen zweiter Daten nach einem vorgegebenen Arbeitsschritt bei einem Waschvorgang des Kraftfahrzeugs von der Waschstraße an das Kraftfahrzeug, wobei die ersten Daten ein automatisches Einfahren des Kraftfahrzeugs in die Waschstraße ermöglichen und die zweiten Daten zum Auslösen eines automatischen Weiterfahrens des Kraftfahrzeugs in oder aus der Waschstraße ausgebildet sind.

Die Waschstraße sendet an seine Umgebung ein Identifikationssignal (Ping) über die Identität und/oder die Art der Waschstraße sowie deren exakte Position. Empfängt das Kraftfahrzeug dieses Identifikationssignal, so kann der Fahrer über die Möglichkeit der autonom befahrbaren Waschstraße entsprechend informiert werden. Im Bedarfsfall fährt dann das Fahrzeug automatisch, teilautomatisch oder manuell zum Eingang der Waschstraße.

In vorteilhafter Weise ist es somit möglich, dass ein Kraftfahrzeug vollkommen automatisch in eine Waschstraße einfährt, dort während des Waschvorgangs und ggf. Trocknungsvorgangs bleibt und anschließend wieder vollkommen automatisch vorwärts oder rückwärts aus der Waschstraße herausfährt. Dieses vollständig automatische Fahren lässt sich als autonomes Fahren in der Waschstraße bezeichnen, wobei der Fahrer entweder das Auto verlässt und das Fahrzeug ohne Fahrer selbst fährt, oder der Fahrer einfach sitzen bleibt und sich fahren lässt.

Ein besonderer Vorteil des erfindungsgemäßen Verfahrens bzw. der erfindungsgemäßen Waschstraße ist außerdem, dass bezogen auf das Fahrzeug geringere Kosten für das autonome Fahren in der Waschstraße auftreten gegenüber dem Fall, dass das autonome Fahren durch fahrzeuginterne Sensorik gesteuert wird. Außerdem lässt sich durch den Verbau der Sensorik in der Waschstraße in den Fahrzeugen Gewicht einsparen, da die jeweiligen Sensoren entfallen können.

Das Detektieren der Fahrzeugposition und/oder Fahrzeugorientierung kann auf der Basis von Ultraschall, Radar oder Laser erfolgen. Derartige Sensorsysteme zeichnen sich durch ihre hohe Genauigkeit aus.

Alternativ oder zusätzlich kann das Detektieren der Fahrzeugposition und/oder Fahrzeugorientierung auf der Basis von Kamerabildern, kapazitiven Messungen oder induktiven Messungen erfolgen. Derartige Sensorsysteme zeichnen sich durch ihre Zuverlässigkeit insbesondere auch in Waschstraßen aus.

Vorzugsweise erfolgt das Übertragen der ersten und/oder zweiten Daten von der Waschstraße an das Fahrzeug drahtlos. Damit lässt sich ohne großen materiellen Aufwand auch bereits vor der Waschstraße und auch nach der Waschstraße eine Kommunikation zwischen Fahrzeug und Waschstraße herstellen.

Insbesondere kann das Übertragen der ersten bzw. zweiten Daten durch Bluetooth oder WLAN erfolgen. Es können aber auch andere Standardübertragungsverfahren genutzt werden. In jedem Fall müssen dann nicht spezielle Kommunikationsschnittstellen geschaffen werden, sondern es können vielmehr Standardkommunikationsverfahren genutzt werden.

Bei einer Ausführungsform kann das Kraftfahrzeug nach dem Einfahren in die Waschstraße eine Waschposition einnehmen und bei dem Weiterfahren in eine Trocknungsposition in der Waschstraße gebracht werden. Das Fahrzeug erhält dabei vorzugsweise ein Fahrsignal von der Waschstraße, das das Weiterfahren auslöst. Dies ist beispielsweise dann von Vorteil, wenn die Waschstraße aus einem Waschraum und einem Trocknungsraum besteht und das Kraftfahrzeug nach dem Waschen von der Waschposition im Waschraum in eine Trocknungsposition in dem Trocknungsraum automatisch bewegt werden soll, ohne dass der Fahrer eingreift.

Alternativ kann das Weiterfahren auch ein Ausfahren aus der Waschstraße darstellen. Somit lässt sich das erfindungsgemäße Verfahren auch für Waschstraßen verwenden, die nur über einen einzigen Raum zum Waschen und Trocknen verfügen.

Günstigerweise wird ein Fahrer des Kraftfahrzeugs nach dem automatischen Ausfahren aus der Waschstraße automatisch über das Ausfahren benachrichtigt. Dies ist besonders dann von Vorteil, wenn der Fahrer das Kraftfahrzeug vor der Einfahrt in die Waschstraße verlassen hat und das Fahrzeug die Waschstraße autonom ohne Fahrer durchfährt. Der Fahrer muss sich dann nicht in unmittelbarer Nähe der Waschstraße befinden, sondern kann die Nachricht auch auf einem beispielsweise in einem Aufenthaltsraum oder Restaurant befindlichen Bildschirm oder aber auch beispielsweise auf einem Mobiltelefon oder einem anderen mobilen Ausgabegerät empfangen.

Ferner ist von Vorteil, wenn vor dem automatischen Einfahren in die Waschstraße einem Fahrer im Fahrzeug die Möglichkeit zum autonomen Fahren angezeigt wird. Dadurch kann sich der Fahrer sicher sein, dass die Kommunikation zwischen Waschstraße und Fahrzeug ordnungsgemäß läuft und er ohne Bedenken in einen vollautomatischen bzw. autonomen Modus schalten kann.

Die oben angesprochenen Verfahrensmerkmale lassen sich ggf. auch mit entsprechend ausgebildeten Mitteln in der beanspruchten Waschstraße realisieren.

Die vorliegende Erfindung wird nun anhand der beigefügten Zeichnungen näher erläutert, in denen zeigen:
Fig. 1 schematisch einen erfindungsgemäßen Verfahrensablauf und
Fig. 2 eine Draufsicht auf eine Waschstraße, die autonom befahrbar ist.

Die nachfolgend näher geschilderten Ausführungsbeispiele stellen bevorzugte Ausführungsformen der vorliegenden Erfindung dar.

Das Ein- bzw. Durchfahren einer Waschstraße mit einem Kraftfahrzeug erfolgt hier autonom. Dies bedeutet, dass der Fahrer das Auto verlassen kann und das Kraftfahrzeug, insbesondere ein Personenkraftwagen, vollkommen automatisch durch die Waschstraße hindurchfährt. Alternativ kann der Fahrer auch im Kraftfahrzeug sitzen bleiben und wird automatisch durch die Waschstraße gefahren.

Unter einer Waschstraße wird hier jeder Typ einer Waschanlage verstanden, bei der ein Kraftfahrzeug gewaschen und ggf. getrocknet wird. Hierzu zählen, wie eingangs erwähnt, Waschstraßen, bei denen das Fahrzeug während des Waschvorgangs und ggf. des Trocknungsvorgangs steht, bei denen das Fahrzeug während des Waschvorgangs und/oder Trocknungsvorgangs ständig bewegt wird oder bei denen das Kraftfahrzeug nach dem Waschen lediglich von einer Waschposition in eine Trocknungsposition gefahren wird. Generell lässt sich das erfindungsgemäße Verfahren auch auf andere Waschstraßen anwenden, in denen ein Fahrzeug gefahren werden muss.

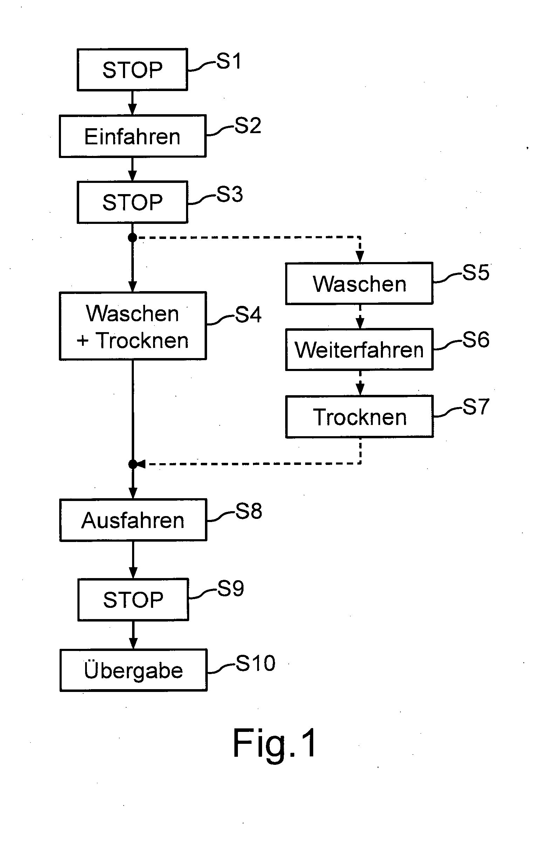

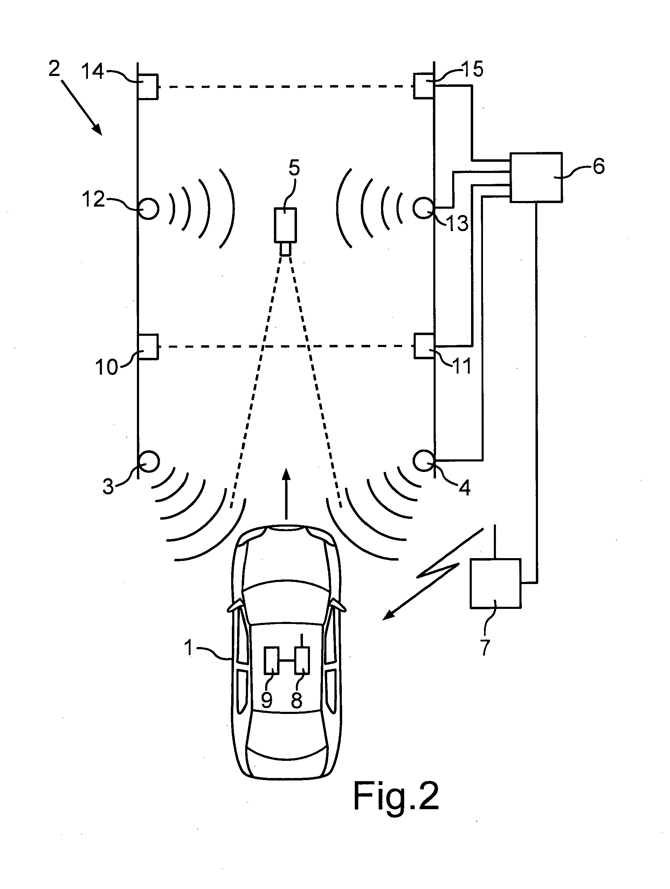

In dem Beispiel von Fig. 1 fährt ein Fahrer das zu waschende Kraftfahrzeug 1 an eine Waschstraße 2 (vgl. auch Fig. 2). Optional sendet die Waschstraße an seine Umgebung ein Identifikationssignal (Ping) über die Identität und/oder die Art der Waschstraße sowie deren exakte Position. Empfängt das Kraftfahrzeug 1 dieses Identifikationssignal, so kann der Fahrer über die Möglichkeit der autonom befahrbaren Waschstraße entsprechend informiert werden. Im Bedarfsfall fährt dann das Fahrzeug 1 automatisch, teilautomatisch oder manuell zum Eingang der Waschstraße.

Unabhängig davon, ob das Vorfahren vor die Waschstraße automatisch, teilautomatisch oder manuell erfolgt, muss dem Fahrer vor dem Umschalten in den Autonommodus signalisiert werden, wann ein autonomes bzw. vollautomatisches Fahren in/an der Waschstraße überhaupt möglich ist. Sobald dies möglich ist, kann der Fahrer eine Übergabeprozedur starten. Hierzu stoppt er gemäß Schritt S1 von Fig. 1 das Fahrzeug und aktiviert den Autonommodus des Fahrzeugs. Ist das Fahrzeug mit einem manuellen Schaltgetriebe ausgestattet, muss der Fahrer für die Übergabe ggf. in den Leerlauf schalten.

Zur Aktivierung des Autonommodus des Fahrzeugs drückt der Fahrer beispielsweise einen Knopf oder ein anderes Betätigungselement im Fahrzeug. Alternativ kann er auch ein entsprechendes sprachliches Triggersignal oder ein Triggersignal über ein Mobilgerät (z. B. Mobiltelefon) an die Fahrzeugsteuerung abgeben.

Zum automatischen Einfahren in die Waschstraße ist ein Detektieren der Fahrzeugposition und der Fahrzeugorientierung des Kraftfahrzeugs in oder an der Waschstraße notwendig. Dazu verfügt die Waschstraße, wie im Zusammenhang mit Fig. 2 näher erläutert werden wird, geeignete Sensoren, wie beispielsweise auf Ultraschall basierende Abstandsensoren im Einfahrtsbereich. Diese Sensoren sind Teil einer in die Waschstraße integrierten Detektoreinrichtung. Die von ihnen bzw. einer nachgeschalteten Signalverarbeitung erzeugten Daten enthalten Informationen über die Fahrzeugposition und Fahrzeugorientierung.

Diese Informationen, die die Fahrzeugposition und Fahrzeugorientierung vor oder beim Umschalten in den Autonommodus betreffen, müssen von der Waschstraße roh oder in verarbeiteter Form an das Fahrzeug übertragen werden. Für die Datenübertragung eignet sich vor allem eine drahtlose Kommunikation. Vorzugsweise werden hierzu Standardkommunikationsprotokolle wie Bluetooth, WLAN und dergleichen genutzt.

Die zu übertragenden Daten (erste Daten) über die Fahrzeugposition und die Fahrzeugorientierung können von der Waschstraße zu dem Fahrzeug bereits vor dem autonomen Fahren bzw. vor dem Aktivieren des Autonommodus übertragen werden. Alternativ werden diese ersten Daten erst nach dem Aktivieren des Autonommodus übertragen. Hierbei beziehen sich die Fahrzeugposition und die Fahrzeugorientierung jeweils relativ zu einem vorgegebenen Fahrkorridor in der Waschstraße.

Nach dem Aktivieren des Autonommodus erfolgt gemäß Schritt S2 ein automatisches Einfahren in die Waschstraße. Hierzu bedient sich die Fahrzeugsteuerung der von der Waschstraße erhaltenen ersten Daten und ggf. zusätzlicher Daten von der fahrzeugeigenen Sensorik.

Das Fahrzeug muss nun bis zu einer vorgegebenen Waschposition ohne Fahrerunterstützung in die Waschstraße einfahren. D. h. das Fahrzeug muss an der Waschposition gemäß Schritt S3 stoppen. Dieses Stoppen erfolgt automatisch, wenn die Waschstraßensensorik das Erreichen der Waschposition ermittelt hat oder dem Fahrzeug mit den ersten Daten eine Länge eines Fahrtwegs von der aktuellen Position vor dem Einfahren bis zu der vorgegebenen Waschposition mitgeteilt wurde.

Die Waschstraße detektiert in üblicher Weise das Erreichen der Waschposition und beginnt mit den Bearbeitungsschritten des Waschens und ggf. des Trocknens des Fahrzeugs gemäß Schritt S4. Alternativ können die Bearbeitungsschritte des Waschens und Trocknens auch manuell gestartet werden. In dem oben geschilderten Fall erfolgt das Waschen und Trocknen des Fahrzeugs an einer einzigen Position, hier der Waschposition. Fährt der Fahrer sein Fahrzeug jedoch in eine andere Waschstraße mit einer Waschkammer und einer separaten Trocknungskammer, so ist es notwendig, das Fahrzeug nach dem Waschen in die Trocknungskammer weiterzufahren. Dieser andere Typ der Waschstraße wurde dem Fahrzeug ggf. automatisch in dem Identifikationssignal der Waschstraße zu Beginn des autonomen Fahrens bzw. vor dem autonomen Fahren übermittelt. Spezifisch für den Waschstraßentyp wird dann nach dem Stoppen des Fahrzeugs in der Waschposition gemäß Schritt S3 ein Waschen gemäß Schritt S5 durchgeführt. Nach dem letzten Bearbeitungsschritt des Waschens übermittelt die Waschstraße ein Weiterfahrsignal an das Fahrzeug. Das Weiterfahrsignal enthält zweite Daten und wird nach einem vorgegebenen Arbeitsschritt bei einem Waschvorgang des Kraftfahrzeugs (z. B. dem letzten Waschschritt) von der Waschstraße an das Fahrzeug übertragen.

Ausgelöst durch dieses Weiterfahrsignal startet das Fahrzeug ggf. den Motor neu, legt den entsprechenden Gang ein und fährt gemäß Schritt S6 weiter von der Waschposition in eine Trocknungsposition, d. h. von dem Waschraum in einen Trocknungsraum. Erreicht das Fahrzeug die Trocknungsposition, so schaltet es ggf. wieder in den Leerlauf und stellt den Motor ab. Nun erfolgen seitens der Waschstraße die einzelnen Bearbeitungsschritte des Trocknens gemäß Schritt S7.

Nach den Schritten S4 bzw. S7 ist das Fahrzeug gereinigt und kann die Waschstraße verlassen. Dazu erhält es von der Waschstraße einen Steuerimpuls, d. h. ein Ausfahrsignal. Die von der Waschstraße an das Fahrzeug übertragenen zweiten Daten können also nach Schritt S4 auch ein Ausfahrsignal sein bzw. enthalten. Nach Schritt S7 bzw. dem letzten Trocknungsschritt werden dritte Daten an das Fahrzeug übertragen, die das Ausfahrtssignal enthalten.

Nach Empfang dieses Ausfahrsignals startet das Fahrzeug den Motor und legt den notwendigen Gang bzw. den entsprechenden Fahrmodus ein. Mit dem Motorstart hat dann ein weiterer Teil des autonomen Fahrens, nämlich das Ausfahren aus der Waschstraße gemäß Schritt S8 begonnen. Das Fahrzeug fährt dabei, wieder durch seine Sensorik gesteuert, automatisch den Korridor der Waschstraße weiter, bis es das Waschstraßengebäude verlassen hat. Die Sensorik des Fahrzeugs stellt fest, dass das Fahrzeug vollkommen aus dem Waschstraßengebäude ausgefahren ist bzw. sich in einer Abholposition außerhalb des Waschstraßengebäudes befindet. In dieser Abholposition wird das Fahrzeug im autonomen Modus automatisch gestoppt, es wird in den Leerlauf geschaltet und ggf. der Motor abgestellt (Schritt S9).

Die Abholposition muss nicht unmittelbar an der Ausfahrt des Waschstraßengebäudes angeordnet sein. Vielmehr kann die Abholposition auch auf einem Warteparkplatz gelegen sein, wobei sie ggf. dynamisch durch das Fahrzeug und die Waschstraßenanlage bestimmt wird. Ein derartiger Warteparkplatz hätte den Vorteil, dass das Fahrzeug nicht unmittelbar nach Verlassen der Waschstraße vom Fahrer abgeholt werden muss. Vielmehr könnte sich der Fahrer beispielsweise in der benachbarten Tankstelle beispielsweise zum Kaffeetrinken aufhalten, während das Fahrzeug vollkommen autonom durch die Waschstraße fährt. Nach beendetem Waschen kann der Fahrer dann beispielsweise mittels eines Bildschirms in der Tankstelle davon unterrichtet werden, dass sein Fahrzeug zur Abholung bereit steht. Alternativ könnte der Fahrer auch auf seinem Mobiltelefon oder einem anderen Mobilgerät eine Nachricht erhalten, dass sein Auto fertig ist. Der Fahrer kann dann bei Gelegenheit sein Fahrzeug abholen.

In jedem Fall muss nach dem autonomen Fahren eine Übergabe gemäß Schritt S10 an den Fahrer erfolgen. Diese Übergabe erfolgt im Wesentlichen dadurch, dass der Autonommodus ausgeschaltet wird. Dazu ist es je nach Situation notwendig, dass das Fahrzeug automatisch in den Leerlauf schaltet und ggf. den Motor abstellt. Der Fahrer kann dann das Fahrzeug sicher übernehmen.

Alternativ kann die Übergabe gemäß Schritt S10 auch unmittelbar nach dem autonomen Stoppen gemäß Schritt S9 erfolgen, wenn der Fahrer beim Durchfahren der Waschstraße im Fahrzeug sitzengeblieben ist. In diesem Fall kann beispielsweise der Motor weiterlaufen und es wird im Autonommodus lediglich der Leerlauf eingelegt und die Feststellbremse betätigt. Zum manuellen Weiterfahren muss der Fahrer dann lediglich die Feststellbremse lösen und den Gang einlegen.

Fig. 2 gibt schematisch eine Draufsicht auf eine beispielhaft Waschstraße wieder, die einen autonomen Betrieb des Fahrzeugs während des Waschens erlaubt. Das Kraftfahrzeug 1 steht hier vor der Waschstraße 2 bzw. vor dem Waschstraßengebäude. Sensoren 3 und 4 erfassen ggf. zusammen mit einer Kamera 5 die Fahrzeugorientierung und die Fahrzeugposition. Bei den Sensoren 3, 4 handelt es sich beispielsweise um Ultraschall-, Radar- oder Lasersensoren. Ggf. können auch induktive, kapazitive oder andere optische Sensoren eingesetzt werden. Auch die Anzahl der Sensoren zur Erfassung der Fahrzeugorientierung und Fahrzeugposition vor dem Einfahren in die Waschstraße kann beliebig gewählt werden. So können auch mehr oder weniger als drei Sensoren wie in dem Beispiel von Fig. 2 eingesetzt werden. Sämtliche Sensoren der Waschstraße 2 können als Detektoreinrichtung zusammengefasst werden.

Die Daten von den Sensoren 3 und 4 bzw. der Kamera 5 werden zur Feststellung der Fahrzeugposition und Fahrzeugorientierung drahtlos oder drahtgebunden an eine Recheneinheit 6 der Waschstraße übertragen. Diese Recheneinheit 6 berechnet aus den Signalen der Detektoreinrichtung bzw. aus den Signalen der Sensoren die Fahrzeugorientierung und Fahrzeugposition und liefert ein entsprechendes Steuersignal an das Fahrzeug. Hierzu leitet sie das Steuersignal an eine Übertragungseinrichtung 7 weiter, die eine drahtlose Kommunikation mit dem Kraftfahrzeug 1 ermöglicht. Das Kraftfahrzeug 1 besitzt seinerseits eine Empfangseinrichtung 8, die an eine Fahrzeugsteuereinrichtung 9 angeschlossen ist. Über die Empfangseinrichtung 8 erhält die Fahrzeugsteuereinrichtung 9 das Steuersignal von der Recheneinrichtung 6 der Waschstraße.

Das Steuersignal entspricht den ersten Daten, die von der Waschstraße 2 zum Kraftfahrzeug 1 übertragen werden. Diese ersten Daten können mehr oder weniger weiterverarbeitet sein. Im einfachsten Fall enthalten sie lediglich die Rohdaten der Sensoren, und die Fahrzeugsteuereinrichtung 9 verarbeitet diese Rohdaten direkt. Bei einer anderen Ausführungsform werden die Rohdaten der Sensoren bzw. der Detektoreinrichtung in Fahrzeugpositionsdaten und Fahrzeugorientierungsdaten verarbeitet und in dieser Form als erste Daten an das Kraftfahrzeug 1 übertragen. Die Fahrzeugsteuereinrichtung 9 verwendet dann die Fahrzeugpositionsdaten und die Fahrzeugorientierungsdaten zur Fahrzeugsteuerung. Bei einer weiteren Ausführungsform werden die Rohdaten der Detektoreinrichtung der Waschstraße in der Recheneinrichtung 6 bereits zu einem konkreten Fahrsignal weiterverarbeitet, das beispielsweise eine Fahrtrichtung und eine Fahrtlänge beinhaltet. Solche erste Daten sind dann von der Fahrzeugsteuereinrichtung 9 mit sehr geringem Aufwand weiterzuverarbeiten. Unter dem Detektieren einer Fahrzeugposition und Fahrzeugorientierung wird hier also auch das reine Erfassen von Fahrzeugpositionsdaten und Fahrzeugorientierungsdaten verstanden. Hat nun die Recheneinrichtung 6 oder die Fahrzeugsteuereinrichtung 9 eine Fahrtrajektorie berechnet, so fährt das Fahrzeug 1 im autonomen Modus die entsprechende Trajektorie entlang.

Bei einer Ausführungsform wird die gesamte Einfahrtrajektorie bis zu einer vorgegebenen oder vorgebbaren Waschposition im Voraus berechnet und das Fahrzeug fährt entsprechend in die Waschstraße. Bei einer anderen Ausführungsform wird nur ein Teil der gesamten Einfahrtrajektorie berechnet, und die Trajektorie wird ständig aktualisiert, bis von der Waschstraße ein Stoppsignal an das Fahrzeug übertragen wird, so dass das Fahrzeug stoppt. Für das zweite Ausführungsbeispiel ist es dann notwendig, dass während des Einfahrens stets die aktuelle Fahrzeugposition und/oder Fahrzeugorientierung ermittelt wird. Dies lässt sich durch eine Mehrzahl an Sensoren 3 bis 5 und 10 bis 15 realisieren. In dem Beispiel von Fig. 2 ist die Anzahl der Sensoren rein symbolisch zu betrachten. Die Anzahl der Sensoren ist auf den jeweiligen Bedarf auszulegen. Beispielsweise können Lichtschranken 10, 11 sowie 14, 15 eingesetzt werden, um exakte Fahrzeuglängspositionen zu ermitteln. Darüber hinaus können auch weitere Abstandssensoren 12, 13 in der Waschstraße 2 integriert sein, die die laterale Position des Fahrzeugs in der Waschstraße überwachen.

Mit der Mehrzahl an Sensoren in der Waschstraße kann dann beispielsweise eine Waschposition und ggf. auch eine Trocknungsposition nach einer Weiterfahrt exakt angesteuert bzw. ermittelt werden. Auch das Ausfahren aus der Waschstraße und ggf. auch das Weiterfahren außerhalb der Waschstraße kann durch die Waschstraßensensorik unterstützt werden.

In vorteilhafter Weise wird durch das oben geschilderte autonome Fahren in die bzw. durch die Waschstraße der Komfort beim Nutzen eines Fahrzeugs erhöht. Darüber hinaus erhöht das autonome Fahren in einer Waschstraße auch die Sicherheit nicht nur für das Fahrzeug, sondern auch für die Waschstraße selbst.

## Patentansprüche

1. Verfahren zum autonomen Fahren eines Kraftfahrzeugs (1) in einer Waschstraße (2),
mit den Schritten:
- Detektieren einer Fahrzeugposition und Fahrzeugorientierung des Kraftfahrzeugs in oder an der Waschstraße durch eine in die Waschstraße integrierte Detektoreinrichtung unter Erzeugung entsprechender erster Daten,
- Übertragen der ersten Daten von der Waschstraße an das Kraftfahrzeug,
- automatisches Einfahren (S2) des Fahrzeugs in die Waschstraße anhand der übertragenen ersten Daten,
- Übertragen von zweiten Daten nach einem vorgegebenen Arbeitsschritt (S4, S5) bei einem Waschvorgang des Kraftfahrzeugs von der Waschstraße an das Kraftfahrzeug,
- automatisches Steuern eines Weiterfahrens (S6, S8) des Kraftfahrzeugs in oder aus der Waschstraße in Abhängigkeit von den zweiten Daten,
**dadurch gekennzeichnet, dass** die Waschstraße (2) an seine Umgebung ein Identifikationssignal (Ping) über die Identität und/oder die Art der Waschstraße (2) sowie deren exakte Position sendet.

2. Verfahren nach Anspruch 1, wobei das Detektieren der Fahrzeugposition und/oder Fahrzeugorientierung auf der Basis von Ultraschall, Radar oder Laser erfolgt.

3. Verfahren nach Anspruch 1, wobei das Detektieren der Fahrzeugposition und/oder Fahrzeugorientierung auf der Basis von Kamerabildern, kapazitiven Messungen oder induktiven Messungen erfolgt.

4. Verfahren nach einem der vorhergehenden Ansprüche, wobei das Übertragen der ersten und/oder zweiten Daten von der Waschstraße (2) an das Kraftfahrzeug (1) drahtlos erfolgt.

5. Verfahren nach Anspruch 4, wobei das Übertragen durch Bluetooth oder WLAN erfolgt.

6. Verfahren nach einem der vorhergehenden Ansprüche, wobei das Fahrzeug (1) nach dem Einfahren (S2) in die Waschstraße (2) eine Waschposition einnimmt, und das Kraftfahrzeug (1) durch das Weiterfahren (S6, S8) in eine Trocknungsposition in der Waschstraße gebracht wird.

7. Verfahren nach einem der Ansprüche 1 bis 5, wobei das Weiterfahren (S6, S8) ein Ausfahren aus der Waschstraße darstellt.

8. Verfahren nach Anspruch 7, wobei ein Fahrer des Kraftfahrzeugs nach dem automatischen Ausfahren (S8) aus der Waschstraße (2) automatisch über das Ausfahren benachrichtigt wird.

9. Verfahren nach einem der vorhergehenden Ansprüche, wobei vor dem automatischen Einfahren (S2) in die Waschstraße (2) einem Fahrer im Fahrzeug (1) die Möglichkeit zum autonomen Fahren angezeigt wird.

10. Waschstraße (2), die dazu ausgebildet ist, dass in ihr ein Kraftfahrzeug (1) autonom fährt,
wobei
- eine Detektoreinrichtung zum Detektieren einer Fahrzeugposition und Fahrzeugorientierung des Kraftfahrzeugs (1) in oder an der Waschstraße (2) und zum Erzeugen entsprechender erster Daten,
- einer Übertragungseinrichtung zum Übertragen der ersten Daten von der Detektoreinrichtung an das Kraftfahrzeug, sowie zum Übertragen zweiter Daten nach einem vorgegebenen Arbeitsschritt bei einem Waschvorgang des Kraftfahrzeugs von der Waschstraße an das Kraftfahrzeug, wobei
- die ersten Daten ein automatisches Einfahren (S2) des Kraftfahrzeugs in die Waschstraße ermöglichen und
- die zweiten Daten zum Auslösen eines automatischen Weiterfahrens (S6, S8) des Kraftfahrzeugs in oder aus der Waschstraße ausgebildet sind,
**dadurch gekennzeichnet, dass** die Waschstraße (2) dazu ausgebildet ist, an seine Umgebung ein Identifikationssignal (Ping) über die Identität und/oder die Art der Waschstraße (2) sowie deren exakte Position zu senden.
